Europäisches Patentamt

European Patent Office

Office européen des brevets

(19)

(11) Veröffentlichungsnummer: **0 093 305**
**B1**

(12) # EUROPÄISCHE PATENTSCHRIFT

(45) Veröffentlichungstag der Patentschrift:
12.03.86

(51) Int. Cl.⁴: **F 16 H 21/14**

(21) Anmeldenummer: **83103742.9**

(22) Anmeldetag: **18.04.83**

(54) Vorrichtung zur Erzeugung einer Differenzgeschwindigkeit zwischen einer Eingangswelle und Ausgangswelle.

(30) Priorität: **29.04.82 ZA 822946**

(43) Veröffentlichungstag der Anmeldung:
**09.11.83 Patentblatt 83/45**

(45) Bekanntmachung des Hinweises auf die Patenterteilung:
**12.03.86 Patentblatt 86/11**

(84) Benannte Vertragsstaaten:
**AT BE CH DE FR GB IT LI LU NL SE**

(56) Entgegenhaltungen:
**AT - B - 108 324
AT - B - 189 002
CH - A - 567 200
DE - B - 1 223 218
FR - A - 382 427
FR - A - 901 584
FR - A - 1 068 216
FR - A - 1 138 139
GB - A - 708
GB - A - 1 216 557
US - A - 3 491 604
US - A - 4 332 148**

(73) Patentinhaber: **ADRON (Proprietary) Limited, Lyn Road
Ferndale Ext 4, Randburg 2194 (ZA)**

(72) Erfinder: **Bendig, Franz, 19 Wilton Ave Bryanston,
Sandton (ZA)**
Erfinder: **Bütschi, Robert, Plot 3, Leazonia, Pretria (ZA)**

(74) Vertreter: **Baur, Eduard, Dr.-Ing. Dipl.-Ing.,
Werderstrasse 3, D-5000 Köln 1 (DE)**

## Beschreibung

Die Erfindung betrifft eine Vorrichtung zur Erzeugung einer Differenzgeschwindigkeit zwischen einer mit gleichbleibender Umdrehungsgeschwindigkeit rotierenden Eingangswelle und einer davon angetriebenen Ausgangswelle oder umgekehrt, wobei zwischen einer ortsfest gelagerten Scheibe der Eingangswelle und der koaxial dazu vorhandenen, ebenfalls ortsfest gelagerten Scheibe der Ausgangswelle eine Zwischenscheibe angeordnet ist, die in dem die Eingangs- und die Ausgangswelle tragenden Gehäuse radial zu den Drehachsen der Eingangs- und der Ausgangswelle verschiebbar gelagert ist und die somit drei Scheiben durch in Nuten eingreifende Stifte zur Rotation verbunden sind. Eine Vorrichtung der vorbenannten Ausbildung ist aus der FR-A-1068216 bekannt. Dabei sind die beiden Stiffte an Scheiben vorhanden, die an den Enden der Eingangs- und auch der Ausgangswelle angeordnet sind.

Diese Ausbildung hat den Nachteil, dass bei angetriebener Eingangswelle auch die Ausgangswelle angetrieben bleibt, weil eine Nullstellung, bei der die eine Welle rotiert und die andere Welle eine längere Zeit stillsteht, nicht zu erreichen ist.

Die vorliegende Erfindung geht von der Aufgabe aus, eine Vorrichtung zur Erzeugung einer Differenzgeschwindigkeit zwischen einer vorzugsweise mit gleichbleibender Rotationsgeschwindigkeit rotierenden Eingangswelle und einer davon angetriebenen Ausgangswelle oder umgekehrt zu schaffen, die im wesentlichen aus rotationssymmetrischen Körpern besteht, bei der die Eingangs- und die Ausgangswelle bzw. umgekehrt zeitweise eine gleiche Rotationsgeschwindigkeit oder während einer Umdrehung eine ungleiche Rotationsgeschwindigkeit mit wahlweise einstellbarer Differenz haben können und zugleich eine Welle trotz angetriebener anderer Welle stillstehen kann.

Zur Lösung dieser Aufgabe wird bei einer Vorrichtung zur Erzeugung einer Differenzgeschwindigkeit zwischen einer mit gleichbleibender Umdrehungsgeschwindigkeit rotierenden Eingangswelle und einer davon angetriebenen Ausgangswelle oder umgekehrt, wobei zwischen einer ortsfest gelagerten Scheibe der Eingangswelle und der koaxial dazu vorhandenen, ebenfalls ortsfest gelagerten Scheibe der Ausgangswelle eine Zwischenscheibe angeordnet ist, die in dem die Eingangs- und die Ausgangswelle tragenden Gehäuse radial zu den Drehachsen der Eingangs- und der Ausgangswelle verschiebbar gelagert ist und die somit drei Scheiben durch in Nuten eingreifende Stifte zur Rotation verbunden sind, erfindungsgemäss vorgeschlagen, dass die Scheibe der Eingangswelle und die der Ausgangswelle jeweils mit einer sich im wesentlichen in radialer Erstreckung verlaufenden Nut versehen sind und die radial verschiebbare Zwischenscheibe in gleichem Abstand zu ihrer Drehachse an der einen Seite einen Stift hat, der in die Nut der einen mit der Welle verbundenen Scheibe eingreift und an der anderen Seite einen Stift hat, der in die Nut der anderen, mit der Welle verbundenen Scheibe eingreift.

Diese Lösung ist vorteilhaft ergänzt durch die weitere erfindungsgemässe Massgabe, dass die Scheibe der Eingangswelle und bevorzugt auch die Scheibe der Ausgangswelle jeweils eine Nut haben, die das Zentrum der Scheibe durchkreuzt und die Zwischenscheibe um einen solchen Betrag verschiebbar ist, dass der von ihr getragene Stift koaxial zur Rotationsache der Eingangsscheibe oder der von ihr auf der anderen Seite getragene Stift koaxial zur Rotationsachse der Ausgangswelle verschiebbar ist. Durch diese Lösung lässt sich erreichen, dass nicht lediglich bezogen auf eine Umdrehung eine der Scheiben zu der anderen eine Differenzgeschwindigkeit hat, sondern auch bei rotierender Eingangswelle die Ausgangswelle stillstehen kann.

Die Nut in einer der Scheiben oder bei Anordnung einer Zwischenscheibe in beiden Scheiben der Zwischenscheibe oder an der Scheibe der Eingangswelle und der Scheibe der Ausgangswelle kann geradlinig sein. Besonders vorteilhaft erstreckt sie sich über den gesamten Durchmesser der Scheibe.

Die Wirkung der Differenzgeschwindigkeit zwischen Eingangswelle und Ausgangswelle oder umgekehrt, bezogen auf eine Umdrehung, lässt sich verbessern, sofern die sich in Radialrichtung erstreckende Nut gekrümmt ist. Eine weitere Verbesserung wird durch die weitere erfindungsgemässe Lösung erreicht, dass die Nut in der Scheibe der einen Welle einen anderen Verlauf als die Nut in der Scheibe der anderen Welle hat. Ein weiterer erfindungsgemässer Vorschlag geht dahin, dass die Zwischenscheibe an ihrem Umfang von einem Lager umgeben ist, das von einer rechteckigen Platte getragen ist, die in einer Richtung radial zur Drehachse der Zwischenscheibe verschiebbar ist. Dabei ist besonders vorteilhaft die rechteckige Platte mit einem Stössel versehen, der aus dem die Zwischenscheibe umgebenden Gehäuse herausragt.

In weiterer erfindungsgemässer Ausgestaltung wird zur wahlweisen Veränderung der Differenzgeschwindigkeit zwischen Eingangswelle und Ausgangswelle, bezogen auf eine Umdrehung, aber auch bezogen auf mehrere Umdrehungen, vorgeschlagen, dass das die Zwischenscheibe umgebende Lager in einem weiteren Lager gelagert ist, das entgegen der Drehrichtung des die zwischenscheibe tragenden Lagers drehbar ist.

Die Erfindung ist in den Zeichnungen beispielhaft dargestellt.

Es zeigen:

Fig. 1 das Getriebe in schematischer Darstellung in Oberansicht,

Fig. 2 bis 7 die Rotation der beiden radial versetzten Scheiben bei verschiedenen Winkeln der Umdrehung,

Fig. 8 die Rotation zweier versetzter Scheiben,

Fig. 9 im Diagramm die Differenzgeschwindigkeit der beiden Scheiben,

Fig. 10 eine weitere Abwandlung des Getriebes bei koaxialer Anordnung der Wellen bzw. Scheiben,

Fig. 11 die Darstellung nach Fig. 6 bei radial verschobener Zwischenscheibe,

Fig. 12 den gekrümmten Verlauf der Führungsnut einer Scheibe,

Fig. 13 den anders gekrümmten Verlauf einer Führungsnut,

Fig. 14 in Seitenansicht die lagerung der Zwischenscheibe,

Fig. 15 einen weiteren Verlauf unterschiedlicher Differenzgeschwindigkeiten zwischen den beiden Scheiben,

Fig. 16 einen vertikalen Schnitt durch ein abgewandeltes Getriebe,

Fig. 17 einen vertikalen Schnitt durch ein Anwendungsbeispiel.

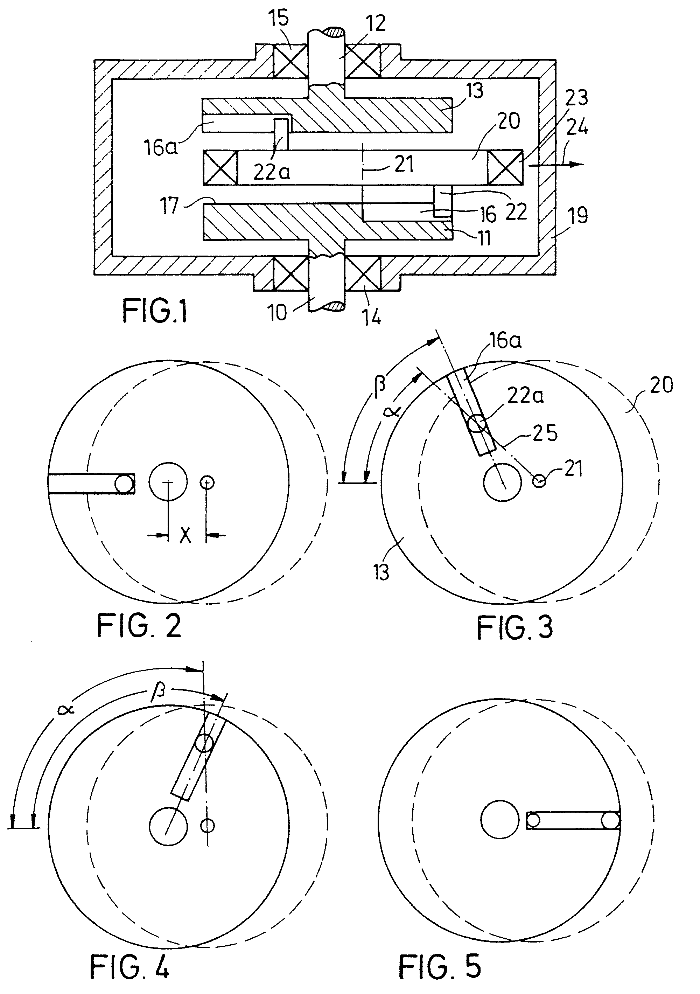

Fig. 1 zeigt das Getriebe mit der Eingangswelle 10, an der eine radial abstehende Scheibe 11 befestigt ist. Vorzugsweise sind Welle und Scheibe einstückig. Weiterhin ist vorhanden die abgehende Welle 12 mit der dort angebrachten Scheibe 13. Die Eingangswelle ist in einem Kugellager 14, die Ausgangswelle in einem Kugellager 15 gelagert. Die Scheibe 11 ist mit einer sich in Radialrichtung erstreckenden Nut 16 versehen, die bevorzugt einen rechteckigen Querschnitt hat. Es sei bemerkt, diese Bemerkung gilt auch für alle weiteren figürlichen Darstellungen, dass die Nut 16 nicht in die Scheibe 11 hineingearbeitet zu sein braucht, sondern es sich auch um eine Schiene entsprechenden Profils handeln kann, die an der Stirnseite 17 der Scheibe angebracht ist.

Die Scheibe 13 hat eine Nut 16a. Die Eingangswelle und die Ausgangswelle sind in einem Gehäuse 19 gelagert und vondiesem umgeben.

Zwischen den beiden Scheiben 11 und 13 ist eine Zwischenscheibe 20 vorhanden, die in einem gleichbleibenden Abstand zu deren Rotationsachse 21 an der zur Scheibe 11 gerichteten Seite den Zapfen 22 und an der zur Scheibe 13 gerichteten Seite den Zapfen 22a hat. Die Zwischenscheibe ist von einem Kugellager 23 umgeben und in angegebener pfeilrichtung 24 radial hin- und hergehend verschiebbar.

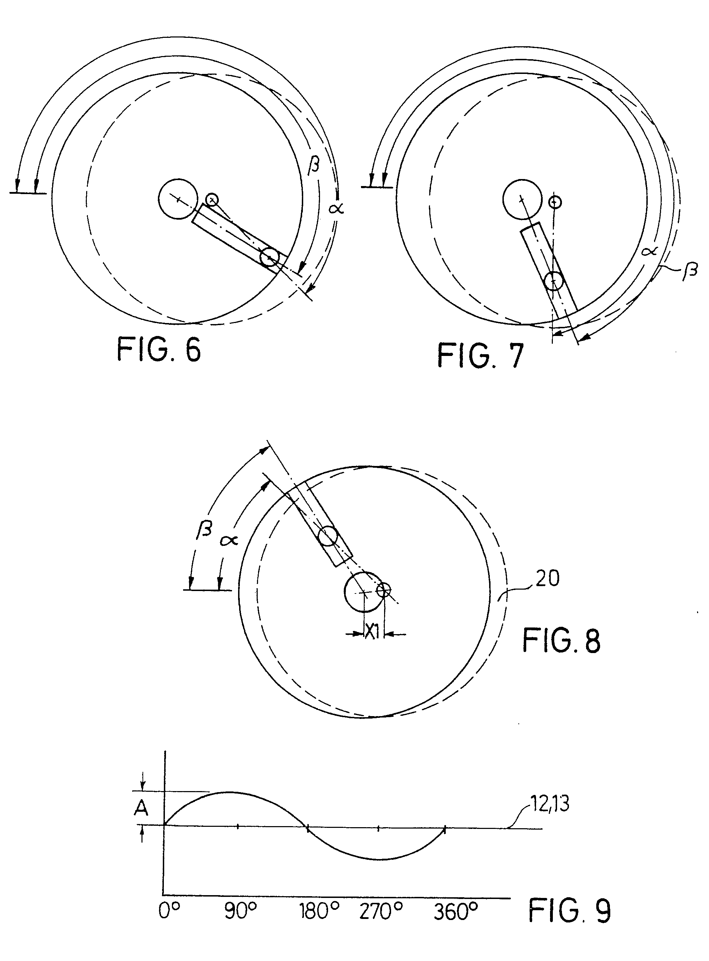

In den Fig. 2 bis 7 ist die erzielte Differenzgeschwindigkeit graphisch dargestellt. Bei einem Drehwinkel α der Zwischenscheibe 20 um die Drehachse 21 und dem Zapfen 18a entsprechend der Linie 25 α=45° ist der Drehwinkel β der Scheibe 13 der Nut 16a grösser, bei einem Drehwinkel α von 90° ist der Drehwinkel β ebenfalls grösser und bei einem Drehwinkel α von 180° ist auch der Drehwinkel β bei 180°. Bei einem Drehwinkel α von 225° ist der Drehwinkel β kleiner. Bei dem Drehwinkel α von 270° ist der Drehwinkel β ebenfalls kleiner. Daraus ergibt sich der in Fig. 9 dargestellte Kurvenverlauf, dass bei gleichbleibender Rotationsgeschwindigkeit pro Zeiteinheit einer Welle mit Scheibe, hier angenommen die Welle 12 mit der Scheibe 13, die Rotationsgeschwindigkeit der anderen Welle mit Scheibe oder der Zwischenscheibe sich ändert. Sie ändert sich in der Weise, dass bei einem Winkel α von 0 bis 90° die Differenzgeschwindigkeit der anderen Scheibe bei einem Drehwinkel von 90° am grössten ist, bei 180° sind sie wieder gleich. Bei der Drehung in der zweiten Hälfte der Kreisbewegung ergibt sich eine Umkehrung in der Weise, dass die in der ersten Hälfte 0 bis 90° erfolgte Voreilung in der zweiten Hälfte von 180 bis 360° eine Nacheilung darstellt. Es ergibt sich ein sinusförmiger Verlauf. Nach einer Drehung der Eingangswelle von 360° ergibt sich ein erneuter vorbeschriebener Rhythmus.

Fig. 8 zeigt, dass die Scheibe 20 lediglich um einen Betrag X1, hier kleineren Betrag, in Radialrichtung verschoben worden ist mit dem Ergebnis, dass der Differenzwinkel zwischen α und β kleiner ist. Daraus ergibt sich, dass, je geringer die Verschiebung ist, auch die Differenzdrehzahl bei Scheiben gleichen Durchmessers auch die Umfangsgeschwindigkeit geringer ist und sofern die Verschiebung X grösser ist, ist auch die Differenz entsprechend grösser.

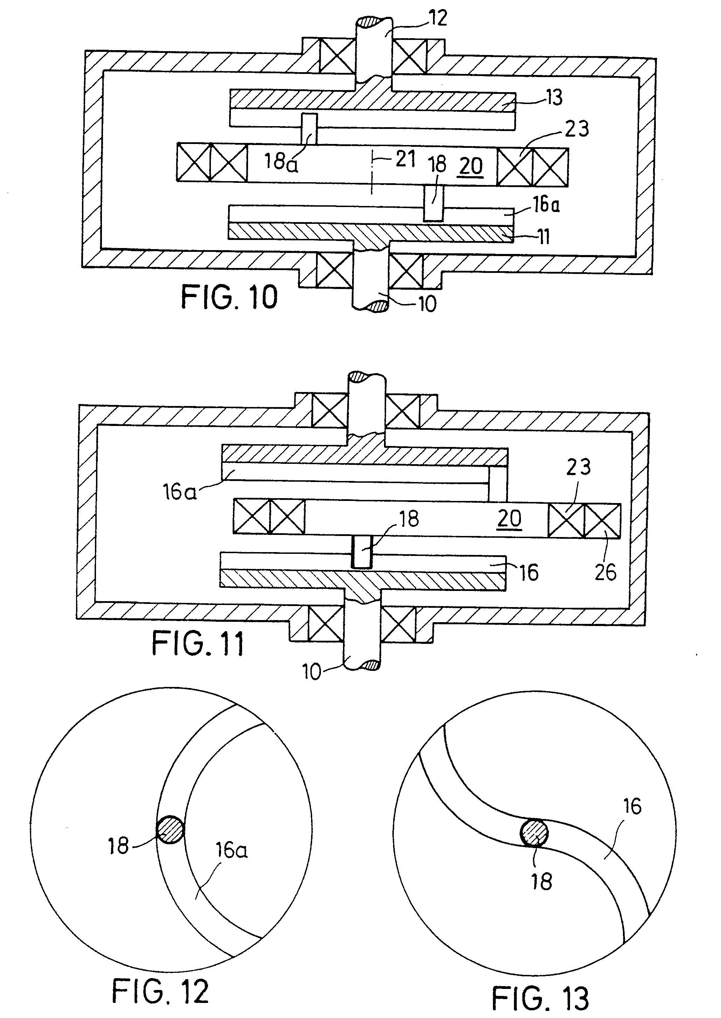

Fig. 10 zeigt eine Fig. 1 gegenüber verbesserte Lösung mit der massgabe, dass die Nuten 16 und 16a sich über den gesamten Durchmesser der Scheiben 11 und 13 erstrecken. Die Zapfen 18 und 18a sind an gegenüberliegenden Seiten der Drehachse wiederum in gleichem Abstand zur Drehachse angeordnet. Sofern die Drehachse 26 der Zwischenscheibe 24 mit den Wellen 10 und 12 koaxial ist, dann ergibt sich keine differenzierte geschwindigkeit. Sofern nach Fig. 23 die Zwischenscheibe 20 um einen solchen Betrag verschoben ist, dass der Zapfen 18 koaxial zur Welle 10 angeordnet ist, dass ergibt sich, dass die Welle 10 die Zwischenscheibe 20 nicht zur Rotation bringt, sondern die Scheibe 11 ohne Ausübung eines Drehmomentes bzw. Hebelwirkung um den Zapfen 18 dreht.

Nach Fig. 11 sind die Nuten 16 und 16a geradlinig. Nach den Fig. 12 und 13 wird vorgeschlagen, diese gekrümmt auszubilden, wobei sie stets durch die Drehachse der Scheibe gehen sollen, um die vorerwähnte neutrale Stellung bei rotierender Eingangswelle zu erreichen. Die gekrümmten Nuten haben den Vorteil, dass der zu Fig. 9 beschriebene sinusförmige Verlauf abgewandelt werden kann und beispielsweise ein steiler Anstieg mit flachem Abfall oder umgekehrt erreicht werden kann. Dies wird nachfolgend noch beschrieben werden.

Die Fig. 10 und 11 zeigen, dass das die Zwischenscheibe 20 umgebende lager 23 selbst nochmals drehbar in einem lager 25 gelagert ist. Um dies zu erreichen, ist die Zwischenscheibe 20 grundsätzlich gehalten in einer rechteckigen Platte 27, und zwar durch das Lager 23. Sofern dann die Scheibe 20 in angegebener Pfeilrichtung 28 rotiert, rotiert auch der Lagerring an der Zwischenscheibe und der mit ihm verbundene Teil des lagers in gleicher Pfeilrichtung 28, 28a. Der zweite, mit der Platte 27 verbundene äussere Teil des lagers oder ein weiteres lager 26 ist so gelagert und über einen Zapfen 29 in angegebener Pfeilrichtung 30 drehbar, so dass dadurch die Differenz der Eingangswelle und Ausgangswelle und umgekehrt weiterhin gesteuert werden.

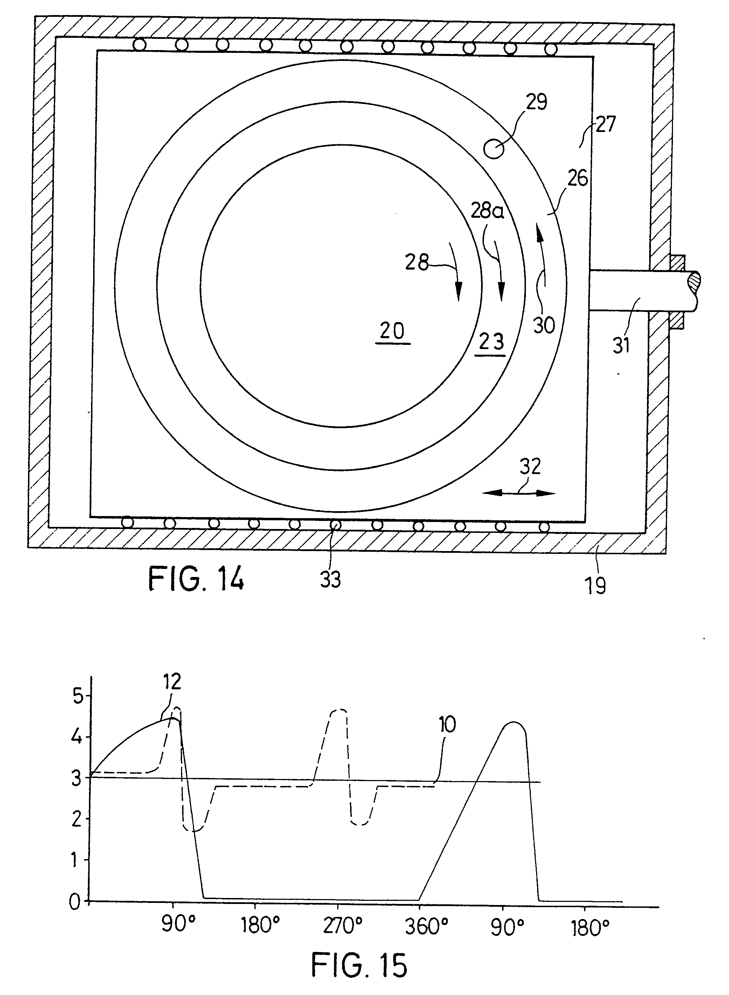

Nach Fig. 14 ist an der Platte 27 ein Stössel 31 vorhanden, der nach aussen führt. Die Platte ist im Gehäuse 19 in angegebener Pfeilrichtung 32 zur Betätigung des Stössels 31 hin- und hergehend verschiebbar gelagert, und zwar vorzugsweise über Nadellager 33.

In Verbindung mit der Massgabe, dass die Zwischenscheibe entgegen der durch die Eingangswelle aufgezwungenen Drehrichtung noch verdreht werden kann, ergeben sich vielseitige Möglichkeiten eines Verlaufs der Differenzgeschwindigkeit zwischen Eingangswelle und Ausgangswelle. Diese ist beispielhaft in Fig. 15 dargestellt. Die horizontale Linie zeigt die konstante Drehzahl der Eingangswelle 10. In ausgezogener Linie ist die Drehzahl pro Zeiteinheit der abgehenden Welle 12 dargestellt, die ausgehend von einer Ausgangsstellung bei gleicher Drehzahl von Eingangswelle zur Ausgangswelle bei einem Drehwinkel α nach 90° absteigt. Dann kann, sofern die Zwischenscheibe 20 in die in Fig. 11 dargestellte neutrale Stellung geschoben wird, die Drehzahl der abgehenden Welle auf 0° eingestellt werden, und zwar über einen beliebig langen Zeitraum. In Fig. 15 ist beispielsweise ein Drehwinkel bis 360° dargestellt. Dann kann wieder ein steiler Anstieg der Geschwindigkeit und anschliessend ein steiler Abfall erfolgen.

In gestrichelter Linie ist ein weiterer Kurvenverlauf dargestellt, der nur beispielhaft ist. Da die Verschiebung der Zwischenscheibe in weiten Grenzen und bei Rotation der Eingangswelle und Ausgangswelle stattfinden kann, so ist es, wie vorerwähnt, möglich, dass bei der in Fig. 11 dargestellten Stellung die Eingangswelle rotiert und die Ausgangswelle stillsteht. Abhängig davon, ob die Zwischenscheibe nach links oder nach rechts geschoben wird und abhängig vom Kurvenverlauf der Nuten ergeben sich viele Variationsmöglichkeiten. Diese werden noch verbessert durch die Massgabe, dass die eine Scheibe eine Nut 16 solcher gekrümmter Ausbildung hat, die zu der Nut 16a an der gegenüberliegenden Scheibe in gleicher Raumform versetzt ist oder anders ausgebildet ist. Um dies einfach erreichen zu können, wird nach Fig. 10 vorgeschlagen, dass an der Zwischenscheibe 11 die Nut 16a auswechselbar befestigt ist.

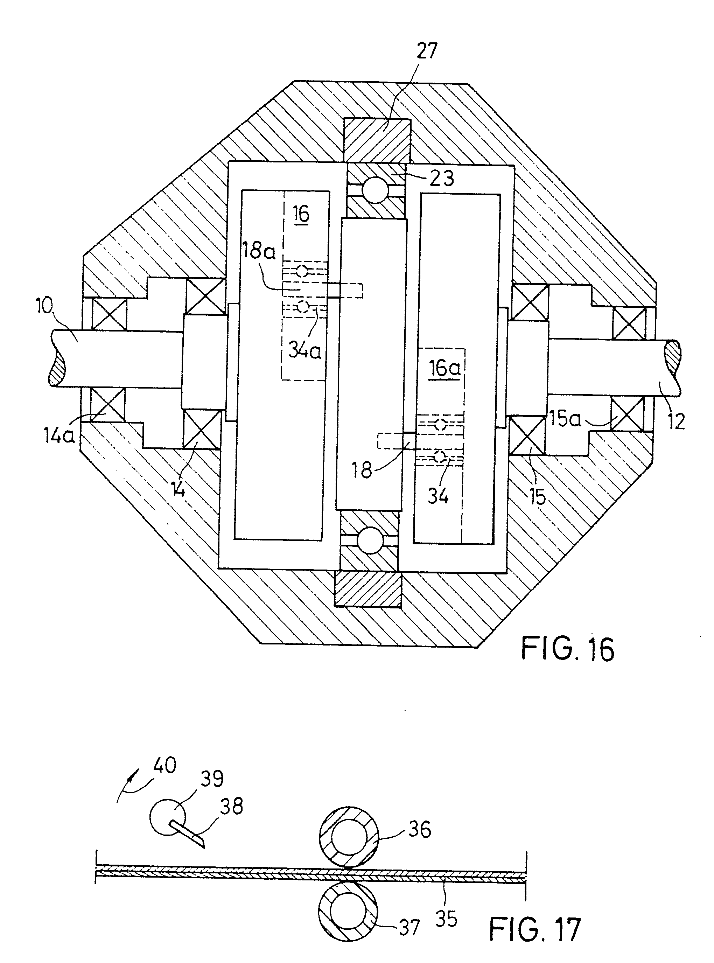

Fig. 16 zeigt, dass die Eingangswelle 10 mit zwei Kugellagern 14 und 14a und die Ausgangswelle 12 mit einem weiteren Kugellager 15a versehen ist. Die Zapfen 18 und 18a sind an ihren in die Nut eingreifenden Enden mit zugeordneten Kugellagern 34, 34a versehen.

Fig. 17 zeigt ein Anwendungsbeispiel. So können beim Transport einer doppellagigen Kunststoffolie die Vorzugswalzen 36, 36a mit differenzierter Geschwindigkeit rotieren, um beispielsweise die beiden Folienlagen einander zu verschieben. Auch das Schneidmesser 38 an einer umlaufenden Welle 39 wird bei einer Ausübung des Schnittes an der Folie 35 eine erhöhte Geschwindigkeit haben und bis zur nächsten Anlage bei der Rotation in Pfeilrichtung 40 langsamer rotieren.

## Patentansprüche

1. Vorrichtung zur Erzeugung einer Differenzgeschwindigkeit zwischen einer mit gleichbleibender Umdrehungsgeschwindigkeit rotierenden Eingangswelle (10) und einer davon angetriebenen Ausgangswelle (12) oder umgekehrt, wobei zwischen einer ortsfest gelagerten Scheibe (11) der Eingangswelle und der koaxial dazu vorhandenen, ebenfalls ortsfest gelagerten Scheibe (13) der Ausgangswelle eine Zwischenscheibe (20) angeordnet ist, die in dem die Eingangswelle und die Ausgangswelle tragenden Gehäuse (19) radial zu den Drehachsen der Eingangswelle und der Ausgangswelle verschiebbar gelagert ist und die somit drei Scheiben durch in Nuten (16, 16a) eingreifende Stifte (22, 22a; 18, 18a) zur Rotation verbunden sind, dadurch gekennzeichnet, dass die Scheibe (11) der Eingangswelle (10) und die Scheibe (13) der Ausgangswelle (12) jeweils mit einer sich im wesentlichen in radialer Erstreckung verlaufenden Nut (16, 16a) versehen sind und die radial verschiebbare Zwischenscheibe (20) in gleichem Abstand zu ihrer Drehachse (21) an der einen Seite einen Stift (18, 22) hat, der in die Nut (16) der einen mit der Welle (10) verbundenen Scheibe (11) eingreift und an der anderen Seite einen Stift (18a, 22a) hat, der in die Nut (16a) der anderen mit der Welle (12) verbundenen Scheibe (13) eingreift.

2. Vorrichtung nach Anspruch 1, dadurch gekennzeichnet, dass der Stift (18) von einem Kugellager (34) umgeben ist, das in der Nut (16) verschiebbar gelagert ist.

3. Vorrichtung nach Anspruch 1, dadurch gekennzeichnet, dass die Scheibe (11) der Eingangswelle (10) und bevorzugt auch die Scheibe (13) der Ausgangswelle (12) jeweils eine Nut (16) haben, die das Zentrum der Scheibe durchkreuzt und die Zwischenscheibe (20) um einen solchen Betrag verschiebbar ist, dass der von ihr getragene Stift (18) koaxial zur Rotationsachse der Eingangswelle (10) oder der von ihr auf der anderen Seite getragenen Stift (18) koaxial zur Rotationsachse der Ausgangswelle (12) verschiebbar ist.

4. Vorrichtung nach Anspruch 1, dadurch gekennzeichnet, dass die sich im wesentlichen in radialer Richtung der Scheibe erstreckende Nut (16) geradlinig ist.

5. Vorrichtung nach den Ansprüchen 1 und 3, dadurch gekennzeichnet, dass die sich im wesentlichen in radialer Richtung erstreckende Nut (16) gekrümmt ist.

6. Vorrichtung nach Anspruch 5, dadurch gekennzeichnet, dass die Nut (16) in der Scheibe (11) der einen Welle (10) einen anderen Verlauf als die Nut (16a) in der Scheibe (13) der anderen Welle (12) hat.

7. Vorrichtung nach Anspruch 1, dadurch gekennzeichnet, dass die Zwischenscheibe (20) an ihrem Umfang von einem Lager (23) umgeben ist, das von einer rechteckigen Platte (27) getragen ist, die in einer Richtung radial zur Drehachse (21) der Zwischenscheibe (20) verschiebbar ist.

8. Vorrichtung nach Anspruch 7, dadurch gekennzeichnet, dass die rechteckige Platte (27) mit einem Stössel (31) versehen ist, der aus dem die Zwischenscheibe (20) umgebenden Gehäuse (19) herausragt.

9. Vorrichtung nach Anspruch 7, dadurch gekennzeichnet, dass das die Zwischenscheibe (20) umgebende Lager (23) in einem weiteren Lager (26) gelagert ist, das entgegen der Drehrichtung des die Zwischenscheibe (20) tragenden Lagers (23) drehbar ist.

## Claims

1. Device for the production of a speed difference between an input shaft (10) rotating at constant speed of rotation and an output shaft (12) driven thereby or conversely, wherein an intermediate sheave (20) is arranged between a sheave (11), which is borne to be locally fixed, of the input shaft and the sheave (13), which is present coaxially therewith and likewise borne to be locally fixed, of the output shaft, and is borne in the housing (19), which carries the input shaft and the outut shaft, to be displaceable radially of the rotational axes of the input shaft and the output shaft, and wherein the thus three sheaves are connected for rotation by pins (22, 22a; 18, 18a) engaging in grooves (16, 16a), characterised thereby, that the sheave (11) of the input shaft (10) and the sheave (13) of the output shaft (12) are each provided with a respective groove (16, 16a) extending substantially in radial direction and the radially displaceable intermediate sheave (20) has at equal spacing from its rotational axis (21) at the one side a pin (18, 22) which engages into the groove (16) of the sheave (11) connected with the shaft (10), and at the other side a pin (18a, 22a) which engages into the groove (16a) of the other sheave (13) connected with the shaft (12).

2. Device according to Claim 1, characterised thereby, that the pin (18) is surrounded by a ball bearing, which is displaceably borne in the groove (16).

3. Device according to Claim 1, characterised thereby, that the sheave (11) of the input shaft (10) and preferably also the sheave (13) of the output shaft (12) each have a groove (16) which crosses through the centre of the sheave, and the intermediate sheave (20) is displaceable by such an amount that the pin (18) carried by it is displaceable coaxially with the rotational axis of the input shaft (10), or the pin (18) carried by it on the other side is displaceable coaxially with the rotational axis of the output shaft (12).

4. Device according to Claim 1, characterised thereby, that the groove (16) extending substantially in radial direction of the sheave is rectilinear.

5. Device according to Claims 1 and 3, characterised thereby, that the groove (16) extending substantially in radial direction is curved.

6. Device according to Claim 5, characterised thereby, that the groove (16) in the sheave (11) of the one shaft (10) has a course other than that of the groove (16a) in the sheave (13) of the other shaft (12).

7. Device according to Claim 1, characterised thereby, that the intermediate sheave (20) is surrounded at its circumference by a bearing (23), which is carried by a rectangular plate (27), which is displaceable in a direction radial of the rotational axis (21) of the intermediate sheave (20).

8. Device according to Claim 7, characterised thereby, that the rectangular plate (27) is provided with a pushrod (31), which projects out of the housing (19) surrounding the intermediate sheave (20).

9. Device according to Claim 7, characterised thereby, that the bearing (23), which surrounds the intermediate sheave (20), is borne in a further bearing (26), which is rotatable against the rotational direction of the bearing (23) carrying the intermediate sheave (20).

## Revendications

1. Dispositif pour l'obtention d'une vitesse différentielle entre un arbre d'entrée (10) tournant avec une vitesse de rotation constante et un arbre de sortie (12) entraîné par le précédent, ou inversement, un disque intermédiaire (20) étant disposé entre un disque (11) monté fixe sur l'arbre d'entrée et un disque (13) coaxial au précédent, monté également fixe sur l'arbre de sortie, le disque intermédiaire (20) étant monté mobile en direction radiale par rapport à l'axe de rotation de l'arbre d'entrée et à celui de l'arbre de sortie, dans le boîtier (19) portant l'arbre d'entrée et l'arbre de sortie, et les trois disques étant reliés en rotation au moyen de goujons (22, 22a; 18, 18a) engagés dans des rainures (16, 16a), dispositif caractérisé en ce que le disque (11) de l'arbre d'entrée (10) et le disque (13) de l'arbre de sortie (12) sont munis chacun d'une rainure (16, 16a) qui s'étend en direction essentiellement radiale, et en ce que le disque intermédiaire (20) mobile en direction radiale présente, à distance égale de son axe de rotation (21), sur une face un goujon (18, 22) qui est engagé dans la rainure (16) du disque (11) relié à l'arbre (10), et sur l'autre face un goujon (18a, 22a) qui est engagé dans la rainure (16a) de l'autre disque (13) relié à l'arbre (12).

2. Dispositif selon la revendication 1, caractérisé en ce que le goujon (18) est entouré par un palier à billes (34) qui est logé mobile dans la rainure (16).

3. Dispositif selon la revendication 1, caractérisé en ce que le disque (11) de l'arbre d'entrée (10) et de préférence également le disque (13) de l'arbre de sortie (12) présentent chacun une rainure (16) qui passe par le centre du disque, et en ce que le disque intermédiaire (20) est mobile dans une mesure telle que le goujon (18) qu'il porte soit mobile de façon coaxiale par rapport à l'axe de rotation de l'arbre d'entrée (10), ou que le goujon (18) qu'il porte sur son autre face soit mobile de façon coaxiale par rapport à l'axe de rotation de l'arbre de sortie (12).

4. Dispositif selon la revendication 1, caractérisé en ce que la rainure (16) s'étendant en direction essentiellement radiale du disque est rectiligne.

5. Dispositif selon les revendications 1 et 3, caractérisé en ce que la rainure (16) s'étendant en direction essentiellement radiale est incurvée.

6. Dispositif selon la revendication 5, caractérisé en ce que la rainure (16) présente sur le disque (11) de l'un des arbres (10) un autre tracé que la rainure (16a) sur le disque (13) de l'autre arbre (12).

7. Dispositif selon la revendication 1, caractérisé en ce que le disque intermédiaire (20) est entouré sur sa périphérie d'un palier (23) qui est porté par une plaque (27) rectangulaire, mobile dans une direction, radialement par rapport à l'axe de rotation (21) du disque intermédiaire (20).

8. Dispositif selon la revendication 7, caractérisé en ce que la plaque rectangulaire (27) est munie d'un poussoir (31) qui dépasse du boîtier (19) entourant le disque intermédiaire (20).

9. Dispositif selon la revendication 7, caractérisé en ce que le palier (23) entourant le disque intermédiaire (20) est monté sur un autre palier (26) qui peut être mis en rotation en sens inverse du palier (23) portant le disque intermédiaire (20).

FIG.1

FIG. 2

FIG. 3

FIG. 4

FIG. 5

FIG. 6

FIG. 7

FIG. 8

FIG. 9

FIG. 10

FIG. 11

FIG. 12

FIG. 13

0 093 305

FIG. 14

FIG. 15

13

FIG. 16

FIG. 17